# EUROPÄISCHE PATENTSCHRIFT

(11) **EP 1 507 151 B1**
(45) Veröffentlichungstag und Bekanntmachung des Hinweises auf die Patenterteilung: **31.05.2006**
(21) Anmeldenummer: 03102512.5
(22) Anmeldetag: 12.08.2003
(51) Int. Cl.: G01T 1/29

(54) **Verfahren zum Auslesen von in einer stimulierbaren Phosphorschicht gespeicherten Informationen**
Method for readout of a stimulable phosphor screen
Procédé pour la lecture d'images dans un écran luminescent stimulable

(43) Veröffentlichungstag der Anmeldung: 16.02.2005
(73) Patentinhaber: Agfa-Gevaert HealthCare GmbH, 51373 Leverkusen (DE)
(72) Erfinder: Gebele, Herbert, 82054, Sauerlach (DE); Fasbender, Robert, 85521, Ottobrunn (DE); Weinberger, Michael, 86450, Altenmünster (DE)

(56) Entgegenhaltungen:
- US-A1- 2003 111 620
- US-B1- 6 373 074
- SCHAETZING R, FASBENDER R, KERSTEN P : "New high speed scanning technique for computed radiography " MEDICAL IMAGING 2002, PHYSICS OF MEDICAL IMAGING, Bd. 4682, 24. - 26. Februar 2002, Seiten 511-520, XP002266525 San Diego, CA, USA

## Beschreibung

Die Erfindung betrifft ein Verfahren zum Auslesen von in einer Phosphorschicht gespeicherten Informationen gemäß dem Oberbegriff von Anspruch 1.

Gattungsgemäße Verfahren werden, insbesondere für medizinische Zwecke, im Bereich der Computer-Radiographie (CR) eingesetzt. Hierbei werden Röntgenaufnahmen in einer Phosphorschicht aufgezeichnet, indem die durch ein Objekt, beispielsweise einen Patienten, hindurchtretende Röntgenstrahlung als latentes Bild in der Phosphorschicht gespeichert wird. Zum Auslesen des gespeicherten Bildes wird die Phosphorschicht mit Stimulationslicht bestrahlt, welches von einem optischen Detektor erfasst und in elektrische Signale umgewandelt wird. Die elektrischen Signale können nach Bedarf weiterverarbeitet und auf einem Monitor dargestellt oder an einem entsprechenden Ausgabegerät, wie z. B. einem Drukker, ausgegeben werden.

Die EP 1 319 963 A1 (siehe auch US 2003/111 620 A1) beschreibt ein Verfahren, bei dem ein Detektor in Vorschubrichtung über eine Phosphorschicht geführt wird und dabei das von einzelnen zeilenförmigen Bereichen der Phosphorschicht ausgesandte Emissionslicht erfasst. Die Erfassung des von einem zeilenförmigen Bereich ausgesandten Emissionslichts erfolgt während einer einstellbaren Integrationsdauer. Aufgrund des kontinuierlichen Vorschubs des Detektors während der Integrationsdauer wird die Breite dieses Bereichs in Vorschubrichtung durch die Integrationsdauer bestimmt. Insbesondere bei niedrigen Intensitäten des Emissionslichts wird eine längere Integrationsdauer eingestellt, um die Breite der zeilenförmigen Bereiche zu vergrößern. Hierdurch kann der Anteil des sogenannten Ausleserauschens am Detektorsignal vermindert und folglich das Signal/Rausch-Verhältnis verbessert werden.

Es hat sich jedoch herausgestellt, dass eine längere Integrationsdauer nicht in allen Anwendungsfällen zu einem besseren Signal/Rausch-Verhältnis führt. Vielmehr kann in bestimmten Fällen das Rauschen im Verhältnis zum Signal des erfassten Emissionslichts mit der Integrationsdauer zunehmen, was ein insgesamt schlechteres Signal/Rausch-Verhältnis zur Folge hat.

Da der Detektor bei der Erfassung des Emissionslichts während einer längeren Integrationsdauer einen entsprechend breiteren Bereich der Phosphorschicht in Vorschubrichtung überstreicht als bei einer kürzeren Integrationsdauer, gehen bei dem Verfahren nach dem Stand der Technik darüber hinaus Detailinformationen innerhalb dieses Bereichs verloren. Dieser Effekt wird auch als Bewegungsunschärfe bezeichnet.

Es ist Aufgabe der Erfindung, ein Verfahren zum Auslesen von in einer Phosphorschicht gespeicherten Informationen anzugeben, bei welchem das Signal/Rausch-Verhältnis verbessert und die Bewegungsunschärfe vermindert wird.

Diese Aufgabe wird gemäß Anspruch 1 dadurch gelöst, dass der Detektor das von einem Bereich ausgesandte Emissionslicht während einer Integrationsdauer erfasst, welche kleiner ist als eine Vorschubdauer für die Bewegung des Detektors um die Breite des Bereichs in Vorschubrichtung.

Die Erfindung basiert auf dem Gedanken, die Erfassung des Emissionslichts vom Vorschub des Detektors zu entkoppeln, indem die Integrationsdauer für die Lichterfassung gegenüber der für den Vorschub erforderlichen Vorschubdauer verkürzt wird. Im Verlauf des Vorschubs des Detektors wird das von einem Bereich ausgesandte Emissionslicht während einer Integrationsdauer erfasst, welche innerhalb des für den Vorschub benötigten Zeitintervalls liegt. Auf diese Weise wird die Breite des auszulesenden Bereichs, welche nur durch die Vorschubdauer des Detektors bestimmt ist, von der Integrationsdauer unabhängig.

Das erfindungsgemäße Verfahren führt überraschenderweise zu einem verbesserten Signal/Rausch-Verhältnis, was durch folgende Überlegungen erklärt werden kann:
- Bei den üblicherweise verwendeten Detektoren, wie z.B. CCD- oder Photodiodenarrays, ist dem eigentlichen Detektorsignal als Maß für die erfasste Emissionslichtintensität ein sogenanntes Dunkelrauschen überlagert.
- Einen Anteil des Dunkelrauschens bildet das sogenannte Ausleserauschen, das einmal pro Detektorelement und Auslesevorgang anfällt. Die im Stand der Technik vorgeschlagene Verlängerung der Integrationsdauer zur Verbesserung des Signal/Rausch-Verhältnisses berücksichtigt nur diesen Anteil des Dunkelrauschens.
- Einen weiteren Anteil des Dunkelrauschen bildet das sogenannte thermisch generierte Dunkelrauschen, das von der Größe der Detektorelemente, der Temperatur und der Integrationsdauer des Detektors abhängt. Mit der erfindungsgemäßen Verkürzung der Integrationsdauer gegenüber der Vorschubdauer wird dieser Anteil des Dunkelrauschens vermindert, wobei insgesamt ein verbessertes Signal/Rausch-Verhältnis erzielt wird. Dieser unerwartete Effekt könnte damit erklärt werden, dass der Einfluss des thermisch generierten Dunkelrauschens auf das Signal/Rausch-Verhältnis größer ist als der Einfluss des Ausleserauschens.
- Die Breite der ausgelesenen Bereiche in Vorschubrichtung des Detektors ist bei dem erfindungsgemäßen Verfahren nur durch die Vorschubdauer bestimmt und wird - im Gegensatz zu dem aus dem Stand der Technik bekannten Verfahren - durch die kürzere Integrationsdauer nicht verkleinert. Dadurch wird der Anteil des Ausleserauschens an dem für jeden einzelnen Bereich erhaltenen Detektorsignal nicht erhöht. Folglich wird der Einfluss des Ausleserauschens auf das Signal/Rausch-Verhältnis in den einzelnen Bereichen durch die kürzere Integrationsdauer nicht vergrößert.

Darüber hinaus überstreicht der Detektor bei der Erfassung des Emissionslichts während der Integrationsdauer, welche erfindungsgemäß kürzer ist als die Vorschubdauer, einen entsprechend schmaleren Ausschnitt der Phosphorschicht als bei den aus dem Stand der Technik bekannten Verfahren, bei welchen die Integrationsdauer mit der Vorschubdauer identisch ist. Dadurch werden durch Bewegungsunschärfe verursachte Informationsverluste reduziert.

Zusammenfassend ist festzuhalten, dass mit dem erfindungsgemäßen Verfahren das Signal/Rausch-Verhältnis insgesamt verbessert und dabei gleichzeitig die Bewegungsunschärfe vermindert wird.

In einer bevorzugten Ausführung des Verfahrens ist vorgesehen, dass die Phosphorschicht in dem auszulesenden Bereich während einer Stimulationsdauer mit Stimulationslicht bestrahlt wird und dabei zur Aussendung von Emissionslicht angeregt wird. Durch die Einstellung der Stimulationsdauer unabhängig von der Vorschubdauer kann die Dauer der Anregung unabhängig von der für den Vorschub benötigten Zeit so gewählt werden, dass die Phosphorschicht optimal angeregt wird.

Vorzugsweise ist die Stimulationsdauer kürzer als die Vorschubdauer. Hierdurch wird ein schmalerer Teilbereich des Bereichs mit Stimulationslicht bestrahlt. Die Stimulationsdauer kann hierbei jedoch so gewählt werden, dass das Stimulationslicht infolge von Streuprozessen in der Phosphorschicht auch in Teilbereiche des auszulesenden Bereichs gestreut wird, welche während der Stimulationsdauer nicht direkt mit dem Stimulationslicht bestrahlt werden. Diese Teilbereiche werden dadurch ebenfalls zur Aussendung von Emissionslicht angeregt, welches während der Integrationsdauer vom Detektor detektiert werden kann. Hierdurch wird gewährleistet, dass auch die in diesen Teilbereichen gespeicherte Information erfasst werden kann. Ein Informationsverlust wird dadurch vermieden.

Vorzugsweise ist die Stimulationsdauer gleich der Integrationsdauer. In diesem Fall kann die Einstellung der Integrations- und Stimulationsdauer beim Auslesevorgang auf besonders einfache Weise vorgenommen werden.

In einer weiteren vorteilhaften Ausgestaltung des Verfahrens ist vorgesehen, dass eine Stimulationslicht aussendende Lichtquelle relativ zu der Phosphorschicht bewegt wird, wobei die einzelnen Bereiche der Phosphorschicht nacheinander mit Stimulationslicht bestrahlt und zur Aussendung von Emissionslicht angeregt werden. Hierdurch ist es möglich, die Lichtquelle zusammen mit dem Detektor relativ zu der Phosphorschicht zu bewegen und die Anregung von Emissionslicht synchron zu dessen Erfassung auf einfache Art zu steuern.

Vorzugsweise wird die Lichtquelle hierbei derart gesteuert, dass ein erster Teilbereich des Bereichs mit Stimulationslicht bestrahlt wird und ein zweiter Teilbereich des Bereichs durch in der Phosphorschicht gestreutes Stimulationslicht zur Aussendung von Emissionslicht angeregt wird. Durch eine geeignete Einstellung der Stimulationsdauer kann dann erreicht werden, dass beide Teilbereiche den auszulesenden Bereich vollständig abdecken und Emissionslicht aussenden, wobei nur der erste Teilbereich direkt mit Stimulationslicht bestrahlt wird und der zweite Teilbereich dagegen indirekt durch in der Phosphorschicht gestreutes Stimulationslicht angeregt wird. Trotz einer Stimulationsdauer, welche kürzer ist als die Vorschubdauer für die Bewegung der Lichtquelle über den Bereich, wird hierdurch ein Informationsverlust beim Auslesen dieses Bereichs verhindert.

Eine weitere bevorzugte Ausgestaltung des erfindungsgemäßen Verfahrens sieht vor, dass der Detektor und/oder die Lichtquelle relativ zu der Phosphorschicht mit einer konstanten Vorschubgeschwindigkeit bewegt wird bzw. werden. In diesem Fall entspricht die Vorschubdauer dem Quotienten aus der Breite des Bereichs und der Vorschubgeschwindigkeit. Auf der Grundlage dieser Beziehung kann die Vorschubdauer durch Vorgabe der Breite des Bereichs auf einfache Weise eingestellt werden.

Vorzugsweise wird die Erfassung des von einem Bereich der Phosphorschicht ausgesandten Emissionslichts und/oder die Bestrahlung der Phosphorschicht in einem einzelnen Bereich durch ein Pulssignal gesteuert, wobei die Integrationsdauer bzw. die Stimulationsdauer durch die Pulsbreite der einzelnen Pulse des Pulssignals gegeben ist. Insbesondere wird hierfür ein periodisches Pulssignal verwendet. Vorzugsweise handelt es sich bei den Pulsen um rechteckförmige Pulse. Die Steuerung der Erfassung bzw. Anregung des Emissionslichts läßt sich hierdurch auf einfache Weise realisieren.

Bei der Steuerung mittels eines Pulssignals ist darüber hinaus bevorzugt, dass die Vorschubdauer durch die Zeitdauer zwischen gleichen, d.h. ansteigenden oder abfallenden, Flanken von zwei aufeinander folgenden Pulsen des Pulssignals gegeben ist. Im Falle eines periodischen Pulssignals handelt es sich hierbei um die Periodendauer des Pulssignals. Hierdurch wird auf einfache Weise die Steuerung der Integrations-, Stimulations- und Vorschubdauer realisiert.

Es ist außerdem bevorzugt, dass die einzelnen Bereiche der Phosphorschicht jeweils die Form eine Zeile aufweisen, wobei der Detektor und/oder die Lichtquelle senkrecht zur Längsausdehnung der Zeile relativ zur Phosphorschicht bewegt wird bzw. werden. Auf diese Weise wird die gesamte in einer Zeile der Phosphorschicht gespeicherte Information innerhalb der jeweils eingestellten Integrationsdauer auf einmal erfasst, wodurch die Phosphorschicht besonders schnell ausgelesen werden kann.

Weitere Merkmale und Vorteile der Erfindung ergeben sich aus der folgenden Beschreibung bevorzugter Ausführungsformen und Anwendungsbeispiele, wobei Bezug auf die beigefügten Zeichnungen genommen wird. Die Darstellung der Ausführungsformen ist hierbei nicht maßstabsgetreu.

Es zeigen:
- Fig. 1: eine Vorrichtung zur Durchführung des erfindungsgemäßen Verfahrens;
- Fig. 2: eine auszulesende Phosphorschicht in Draufsicht; und
- Fig. 3: ein Beispiel für ein Pulssignal zur Steuerung des erfindungsgemäßen Verfahrens.

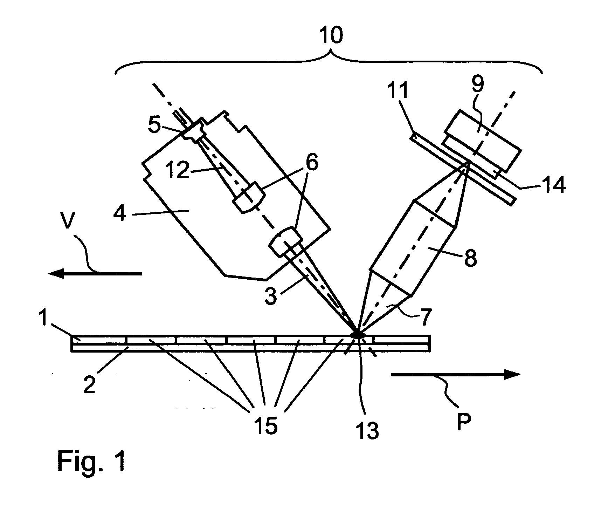

Figur 1 zeigt eine Vorrichtung zur Durchführung des erfindungsgemäßen Verfahrens. Eine auszulesende Phosphorschicht 1 befindet sich auf einer Trägerschicht 2 und wird mit Stimulationslicht 3 bestrahlt, welches von einer Lichtquelle 4 erzeugt wird. Das durch das Stimulationslicht 3 in der Phosphorschicht 1 angeregte Emissionslicht 7 wird mit einem Detektor 9 erfasst. Die Lichtquelle 4 und der Detektor 9, einschließlich einer Abbildungseinrichtung 8 und eines optischen Filters 11, bilden zusammen den Scanner 10, welcher während des Auslesens in Vorschubrichtung V relativ zur Phosphorschicht 1 bewegt wird.

Die Lichtquelle 4 weist mehrere einzelne Strahlungsquellen 5 sowie eine Fokussiereinrichtung 6 auf, welche die von den Strahlungsquellen 5 ausgehenden Stimulationslichtbündel 12 auf die Phosphorschicht 1 fokussieren. Die einzelnen Strahlungsquellen 5 - beispielsweise Leuchtdioden oder Laserdioden - sind in einer senkrecht zur Figurenebene verlaufenden Zeile angeordnet. Die Fokussiereinrichtung 6 weist zwei längliche Zylinderlinsen auf, welche im Wesentlichen parallel zu den in einer Zeile angeordneten einzelnen Strahlungsquellen 5 verlaufen. Die von den einzelnen Strahlungsquellen 5 ausgehenden divergenten Stimulationslichtbündel 12 werden durch die Fokussiereinrichtung 6 in Figurenebene gebündelt und treffen als konvergentes Strahlungsbündel des Stimulationslichts 3 auf die Phosphorschicht 1. Senkrecht zur Figurenebene überlagern sich die divergenten Stimulationslichtbündel 12 der einzelnen Strahlungsquellen 5 in der Weise, dass das konvergente Strahlungsbündel eine senkrecht zur Figurenebene verlaufende, kontinuierliche Stimulationslichtlinie 13 auf der Phosphorschicht 1 beschreibt.

Das im Bereich der Stimulationslichtlinie 13 in der Phosphorschicht 1 angeregte und abgestrahlte Emissionslicht 7 wird mit einem Detektor 9 ortsaufgelöst erfasst. Hierzu weist der Detektor 9 eine Vielzahl von lichtempfindlichen Detektorelementen 14 auf, welche entlang einer senkrecht zur Figurenebene verlaufenden Linie angeordnet sind. Das im Bereich der Stimulationslichtlinie 13 auf der Phosphorschicht 1 emittierte Emissionslicht 7 wird mittels einer Abbildungseinrichtung 8 auf die lichtempfindlichen Detektorelemente 14 des Detektors 9 abgebildet. Der Detektor 9 ist vorzugsweise als CCD- oder Photodiodenzeile ausgebildet.

Als Abbildungseinrichtung 8 eignen sich vorzugsweise Mikrolinsen, welche entlang einer senkrecht zur Figurenebene - und damit parallel zum zeilenförmig ausgebildeten Detektor 9 - verlaufenden Linie angeordnet sind. Alternativ eignen sich hierzu auch Gradientenindex-Linsen, insbesondere selbstfokussierende Linsen, welche ebenfalls in einer senkrecht zur Figurenebene verlaufenden Zeile angeordnet sind. Vorzugsweise werden die einzelnen Bereiche 15 durch die Abbildungseinrichtung 8 im Maßstab 1:1 auf die lichtempfindlichen Flächen 14 des Detektors 9 abgebildet.

Optional kann im Strahlengang zwischen der Phosphorschicht 1 und den Detektoren 9 ein optisches Filter 11 vorgesehen sein, welches im Wellenlängenbereich des Emissionslichts 7 durchlässig ist und im Wellenlängenbereich des Stimulationslichts im Wesentlichen undurchlässig ist. Hierdurch wird gewährleistet, dass die Erfassung des Emissionslichts nicht durch Anteile des Stimulationslichts, welche an der Phosphorschicht 1 reflektiert werden und zum Detektor 9 gelangen können, verfälscht wird.

Im gezeigten Beispiel wird der Scanner 10 mit einem nicht dargestellten Transportmechanismus in Vorschubrichtung V über die ruhende Phosphorschicht 1 bewegt, wobei durch die Stimulationslichtlinie 13 unterschiedliche zeilenförmige Bereiche 15 der Phosphorschicht 1 sukzessive angeregt werden und das jeweils ausgesandte Emissionslicht 7 von den lichtempfindlichen Detektorelementen 14 des Detektors 9 ortsaufgelöst erfasst wird.

Vorzugsweise ist die Lichtquelle 4 bezüglich der Vorschubrichtung V vor dem Detektor 9 angeordnet, d.h. der Scanner 10 läuft mit der Lichtquelle 4 voraus über die Phosphorschicht 1. Hierdurch wird erreicht, dass ein größerer Anteil des in der Phosphorschicht gestreuten Stimulationslichts 3 in Richtung bereits ausgelesener Bereiche 15 gestreut wird, während nur ein kleinerer Anteil des Stimulationslichts 3 in Richtung noch nicht ausgelesener Bereiche 15 der Phosphorschicht 1 gestreut wird. Dadurch können Intensitäts- und Schärfeverluste aufgrund einer Streuung von Stimulationslicht 3 innerhalb der Phosphorschicht 1 vermindert werden.

Im dargestellten Beispiel wird der Scanner 10 über eine ortsfeste Phosphorschicht 1 bewegt. Die obigen Ausführungen gelten selbstverständlich aber auch dann, wenn der Scanner 10 ortsfest ist und die auf der Trägerschicht 2 befindliche Phosphorschicht 1 in Bewegungsrichtung P relativ zu diesem transportiert wird. Dasselbe gilt analog für Ausgestaltungen, bei denen sowohl der Scanner 10 in Vorschubrichtung V als auch die Phosphorschicht 1 in Bewegungsrichtung P bewegt werden.

Während der Scanner 10 in Vorschubrichtung V relativ zur Phosphorschicht 1 bewegt wird, überstreicht die Stimulationslichtlinie 13 einzelne Bereiche 15 der Phosphorschicht 1 und regt diese nacheinander zur Aussendung von Emissionslicht 7 an, welches vom Detektor 9 für jeden der einzelnen Bereiche 15 erfasst wird.

Der Detektor 9 benötigt für die Bewegung um die Breite eines Bereichs 15 eine Vorschubdauer T_{V}. Im Verlauf dieser Bewegung erfassen die lichtempfindlichen Flächen 14 des Detektors 15 während einer Integrationsdauer T_{I} das von dem Bereich 15 ausgesandte Emissionslicht 7.

Die Breite der Bereiche 15 in Vorschubrichtung V liegt typischerweise zwischen etwa 10 µm und 500 µm. Die Querausdehnung der lichtempfindlichen Flächen 14 des Detektors 9 senkrecht zur Richtung der Detektorzeile liegt typischerweise zwischen etwa 10 µm und 600 µm.

Vorzugsweise ist die Querausdehnung der lichtempfindlichen Flächen 14 größer als die Breite der Bereiche 15 in Vorschubrichtung V. Beispielsweise liegt die Breite der Bereiche 15 bei etwa 50 µm, während die Querausdehnung der lichtempfindlichen Flächen 14 bei etwa 400 µm liegt. Die Breite eines einzelnen Bereichs 15 in Vorschubrichtung V ist in diesem Fall durch die Breite des Abschnitts der Phosphorschicht 1 gegeben, den die Stimulationslichtlinie 13 während ihres Vorschubs in Vorschubrichtung V innerhalb der Vorschubdauer T_{V} zur Aussendung von Emissionslicht 7 anregt. Die Ortsauflösung in Vorschubrichtung V, d.h. die kleinstmögliche Breite eines einzelnen Bereichs 15, wird hierbei durch die Breite der Stimulationslichtlinie 13 in Vorschubrichtung V bestimmt.

Zur besseren Veranschaulichung sind die Bereiche 15 der Phosphorschicht 1 und die lichtempfindlichen Flächen 14 des Detektors 9 in Fig. 1 jeweils stark vergrößert und nicht maßstabsgetreu dargestellt.

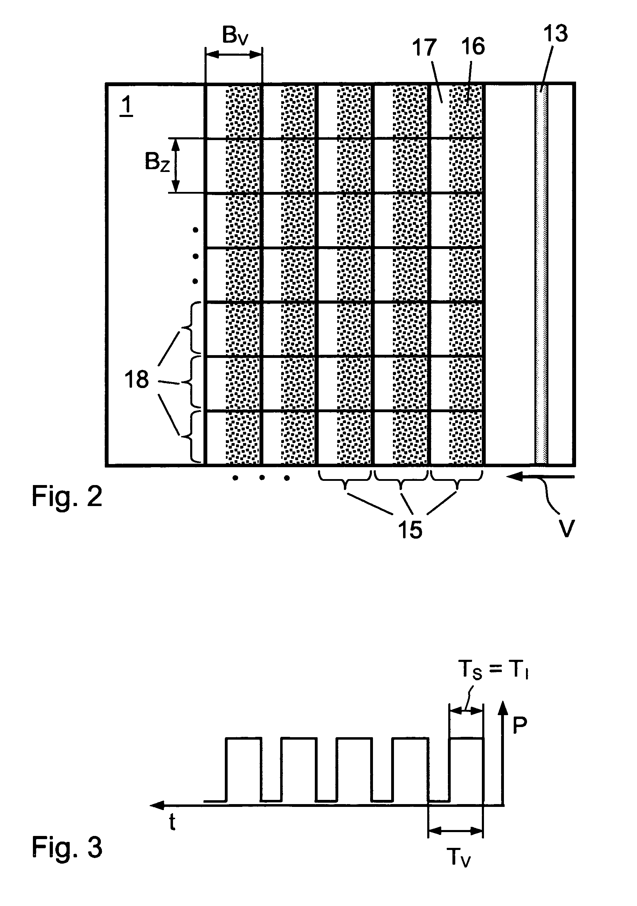

Erfindungsgemäß ist die Integrationsdauer T_{I} kürzer als die Vorschubdauer T_{V}, d.h. T_{I} < T_{V}. Dadurch wird das thermisch generierte Dunkelrauschen gegenüber den aus den Stand der Technik bekannten Verfahren vermindert und damit insgesamt das Signal/Rausch-Verhältnis verbessert. Da der Detektor 9 bei der Erfassung des Emissionslichts 7 während der Integrationsdauer T_{I} nur einen Teil der Breite des Bereichs 15 überstreicht, werden darüber hinaus Informationsverluste, die durch die sog. Bewegungsunschärfe verursacht werden, vermindert. Dies wird im Folgenden zusammen mit den Figuren 2 und 3 näher erläutert.

Fig. 2 zeigt eine auszulesende Phosphorschicht 1 in Draufsicht. Auch in der hier gewählten Darstellung sind - wie bei Fig. 1 - die einzelnen Bereiche 15 der Phosphorschicht 1 aus Gründen einer besseren Anschaulichkeit stark vergrößert dargestellt.

Auf der Phosphorschicht 1 ist eine Stimulationslichtlinie 13 eingezeichnet, welche mit der Lichtquelle 4 und dem Detektor 9 einschließlich Abbildungseinrichtung 8 und Filter 11 (siehe Fig. 1) in Vorschubrichtung V relativ zur Phosphorschicht 1 bewegt wird und dabei die einzelnen Bereiche 15 überstreicht. Für den Vorschub um die Breite eines Bereichs 15 benötigt der Detektor 9 bzw. die Stimulationslichtlinie 13 eine bestimmte Vorschubdauer T_{V}, welche - im Falle einer konstanten Vorschubgeschwindigkeit - dem Quotienten aus der Breite B_{V} der einzelnen Bereiche 15 und der Vorschubgeschwindigkeit entspricht.

Die Lichtquelle 4 ist in der Weise gesteuert, dass lediglich jeweils ein erster Teilbereich 16 der Bereiche 15 direkt mit Stimulationslicht bestrahlt wird, wohingegen ein zweiter Teilbereich 17 der Bereiche 15 nicht direkt mit Stimulationslicht bestrahlt wird. Die Lichtquelle 4 sendet hierbei nur dann Stimulationslicht aus, wenn die Stimulationslichtlinie 13 den ersten Teilbereich 16 überstreicht. Anschließend wird die Lichtquelle 4 ausgeschaltet, so dass eine nunmehr "virtuelle Stimulationslichtlinie" den zweiten Teilbereich 17 überstreicht, ohne diesen mit Stimulationslicht zu bestrahlen. Dementsprechend wird lediglich der erste Teilbereich 16 durch direkte Bestrahlung mit Stimulationslicht zur Aussendung von Emissionslicht angeregt. Der zweite Teilbereich 17 dagegen wird durch das auf den ersten Teilbereich 16 treffende und in der Phosphorschicht 1 teilweise in Vorschubrichtung V gestreute Stimulationslicht zur Aussendung von Emissionslicht angeregt.

Die Steuerung der Lichtquelle 4 erfolgt hierbei durch Vorgabe einer Stimulationsdauer T_{S}, während derer die Lichtquelle 4 bei der Bewegung der Stimulationslichtlinie 13 über einen Bereich 15 eingeschaltet ist. Die Lichtquelle 4 bleibt nach Ablauf der Stimulationsdauer T_{S} dann solange ausgeschaltet, bis die Stimulationslichtlinie 13 einen als nächstes auszulesenden Bereich 15 erreicht hat, bei welchem der beschriebene Bestrahlungszyklus durch Einschalten der Lichtquelle 4 von Neuem beginnen kann.

Die von der Ausdehnung der lichtempfindlichen Flächen 14 des Detektors 9 sowie von der Abbildungseinrichtung 8 abhängende Apertur des Detektors 9 überstreicht dabei ebenfalls die einzelnen angeregten Bereiche 15 der Phosphorschicht 1 nacheinander. Die in einer Zeile angeordneten lichtempfindlichen Flächen 14 des Detektors 9 erfassen dabei das von den zeilenförmigen Bereichen 15 jeweils ausgesandte Emissionslicht 7.

Der Detektor 9 ist dabei in der Weise gesteuert, dass dieser nur während einer Integrationsdauer T_{I} das vom Bereich 15 ausgesandte Emissionslicht 7 erfasst. Erfindungsgemäß ist dabei die Integrationsdauer T_{I} kürzer als die Vorschubdauer T_{V}, welche der Detektor 9 bzw. die Lichtquelle 4 benötigt, um eine der Breite B_{V} der Bereiche 15 entsprechende Wegstrecke in Vorschubrichtung V zurückzulegen. Die Integrationsdauer T_{I}, ist vorzugsweise mit der Stimulationsdauer T_{S} synchronisiert, d.h. diese beginnen zu demselben Zeitpunkt und haben dieselbe Dauer.

Gegenüber den aus dem Stand der Technik bekannten Verfahren, bei welchen die Integrationsdauer mit der Vorschubdauer identisch ist, führt die erfindungsgemäße Verkürzung der Integrationsdauer gegenüber der Vorschubdauer zu einem deutlich reduzierten Dunkelrauschen. Da die Apertur des Detektors 9 bei der Erfassung des Emissionslichts während der kürzeren Integrationsdauer folglich einen in Vorschubrichtung V schmaleren Abschnitt des Bereichs 15 überstreicht, wird gleichzeitig die Bewegungsunschärfe und damit ein daraus resultierender Informationsverlust beim Auslesen vermindert.

Wie in Fig. 2 außerdem zu erkennen ist, sind die einzelnen Bereiche 15 jeweils in eine Vielzahl einzelner Elemente 18 unterteilt. Diese Unterteilung wird durch die Erfassung des von den zeilenförmigen Bereichen 15 ausgesandten Emissionslichts mit einem zeilenförmig ausgebildeten Detektor 9 erreicht, wobei die Breite B_{Z} der Elemente 18 der Ausdehnung der einzelnen lichtempfindlichen Detektorelemente 14 in Zeilenrichtung des Detektors 9 entspricht. Die Breite B_{Z} der Elemente 18 liegt typischerweise zwischen etwa 10 µm und 500 µm, vorzugsweise bei etwa 50 µm.

Das von den einzelnen Elementen 18 ausgesandte und von den entsprechenden lichtempfindlichen Flächen 14 des Detektors 9 zeilenweise erfasste Emissionslicht 7 wird im Detektor 9 in entsprechende Detektorsignale umgewandelt, welche die Bildinformationen des ausgelesenen latenten Röntgenbildes repräsentieren.

Das Auslesen der Phosphorschicht 1 wird vorzugsweise durch ein Pulssignal gesteuert. Fig. 3 zeigt ein Beispiel für ein solches Pulssignal zur Steuerung des erfindungsgemäßen Verfahrens. Die Pulshöhe P ist hierbei über der Zeit t aufgetragen.

Das dargestellte Pulssignal weist einen periodischen Verlauf einzelner Rechteckpulse auf, deren Breite der Stimulationsdauer T_{S} bzw. der Integrationsdauer T_{I} entspricht. Der zeitliche Abstand zwischen den aufsteigenden Flanken zweier aufeinander folgender Pulse entspricht hierbei der Vorschubdauer T_{V}. Bei dem periodischen Pulssignal des vorliegenden Beispiels entspricht die Vorschubdauer T_{V} somit der Periodendauer des Pulssignals.

In diesem Beispiel sind Stimulationsdauer T_{S} und Integrationsdauer T_{I} identisch, d.h. die Anregung und Erfassung des Emissionslichts erfolgen synchron. Alternativ ist es aber auch möglich, den Auslesevorgang mit zwei verschiedenen Pulssignalen zu steuern, die sich in der Breite der Pulse (d.h. die Stimulationsdauer T_{S} ist dann von der Integrationsdauer T_{I} verschieden) und/oder der Phasenlage der Pulse relativ zueinander (d.h. die Stimulationsdauer T_{S} beginnt zu einem anderen Zeitpunkt als die Integrationsdauer T_{I}) unterscheiden.

Das Auslesen der Bereiche 15 der Phosphorschicht 1 in Fig. 2 wird durch das in Fig. 3 gezeigte Pulssignal im Einzelnen wie folgt gesteuert:
- Zum Zeitpunkt der ansteigenden Flanke des ersten Pulses wird sowohl die Lichtquelle 4 eingeschaltet als auch die Erfassung des von diesem Bereich 15 ausgesandten Emissionslichts durch den Detektor 9 gestartet. Von diesem Zeitpunkt an beginnen die Stimulationsdauer T_{S} und die damit synchronisierte Integrationsdauer T_{I} zu laufen.
- Während der Stimulationsdauer T_{S} bzw. Integrationsdauer T_{I} überstreicht die Stimulationslichtlinie 13 den ersten Teilbereich 16 des Bereichs 15, und das ausgesandte Emissionslicht wird durch den Detektor 9 erfasst.
- Bei Ablauf der Stimulationsdauer T_{S} bzw. Integrationsdauer T_{I} ist die Stimulationslichtlinie 13 am zweiten Teilbereich 17 des Bereichs 15 angekommen. Der zweite Teilbereich 17 wird zu diesem Zeitpunkt durch Stimulationslicht angeregt, welches in der Phosphorschicht 1 aus dem direkt bestrahlten ersten Teilbereich 16 in den zweiten Teilbereich 17 hinein gestreut wird. Das vom zweiten Teilbereich 17 ausgesandte Emissionslicht wird daher noch vor Ablauf der Integrationsdauer T_{I} durch den Detektor 9 mit erfasst.
- Vom Zeitpunkt der abfallenden Flanke des ersten Pulses an werden die Lichtquelle 4 und der Detektor 9 abgeschaltet und weiter in Vorschubrichtung V bewegt, bis die Vorschubdauer T_{V} abgelaufen ist.
- Nach Ablauf der Vorschubdauer T_{V} beginnt der beschriebene Prozess für den als nächstes auszulesenden Bereich 15 von Neuem.

Vorzugsweise beträgt die Stimulationsdauer T_{S} bzw. die Integrationsdauer T_{I} etwa 50 % bis 95 % der Vorschubdauer T_{V}. Hierdurch wird eine deutliche Verbesserung des Signal/Rausch-Verhältnisses bei gleichzeitig verminderter Bewegungsunschärfe erreicht. Darüber hinaus ist gewährleistet, dass der zweite Teilbereich 17 noch ausreichend schmal ist, um vollständig mit dem im ersten Teilbereich 16 der Phosphorschicht 1 gestreuten Stimulationslicht angeregt zu werden.

## Patentansprüche

1. Verfahren zum Auslesen von in einer Phosphorschicht gespeicherten Informationen, bei welchem
- die Phosphorschicht (1) zur Aussendung von Emissionslicht (7) angeregt wird,
- das ausgesandte Emissionslicht (7) von einem Detektor (9) erfasst wird und
- der Detektor (9) relativ zu der Phosphorschicht (1) in eine Vorschubrichtung (V) bewegt wird und dabei das von einzelnen Bereichen (15) der Phosphorschicht (1) jeweils ausgesandte Emissionslicht (7) nacheinander erfasst,
**dadurch gekennzeichnet, dass**
der Detektor (9) das von einem Bereich (15) ausgesandte Emissionslicht (7) während einer Integrationsdauer (T_{I}) erfasst, welche kleiner ist als eine Vorschubdauer (T_{V}) für die Bewegung des Detektors (9) um die Breite (B_{V}) des Bereichs (15) in Vorschubrichtung (V).

2. Verfahren nach Anspruch 1, **dadurch gekennzeichnet, dass** die Phosphorschicht (1) in dem Bereich (15) während einer Stimulationsdauer (T_{S}) zur Aussendung von Emissionslicht (7) angeregt wird.

3. Verfahren nach Anspruch 2, **dadurch gekennzeichnet, dass** die Stimulationsdauer (T_{S}) kürzer als die Vorschubdauer (T_{V}) ist.

4. Verfahren nach Anspruch 3, **dadurch gekennzeichnet, dass** die Stimulationsdauer (T_{V}) gleich der Integrationsdauer (T_{I}) ist.

5. Verfahren nach einem der vorangehenden Ansprüche, **dadurch gekennzeichnet, dass** eine Stimulationslicht (3) aussendende Lichtquelle (4) relativ zu der Phosphorschicht (1) bewegt wird, wobei die einzelnen Bereiche (15) der Phosphorschicht (1) nacheinander mit Stimulationslicht (3) bestrahlt und zur Aussendung von Emissionslicht (7) angeregt werden.

6. Verfahren nach Anspruch 5, **dadurch gekennzeichnet, dass** ein erster Teilbereich (16) des Bereichs (15) mit Stimulationslicht (3) bestrahlt wird und ein zweiter Teilbereich (17) des Bereichs (15) durch in der Phosphorschicht (1) gestreutes Stimulationslicht (3) zur Aussendung von Emissionslicht (7) angeregt wird.

7. Verfahren nach einem der vorangehenden Ansprüche, **dadurch gekennzeichnet, dass** der Detektor (9) und/oder die Lichtquelle (4) relativ zu der Phosphorschicht (1) mit einer konstanten Vorschubgeschwindigkeit bewegt wird bzw. werden.

8. Verfahren nach Anspruch 7, **dadurch gekennzeichnet, dass** die Vorschubdauer (T_{V}) dem Quotienten aus der Breite (B_{V}) des Bereichs (15) und der Vorschubgeschwindigkeit entspricht.

9. Verfahren nach einem der vorangehenden Ansprüche, **dadurch gekennzeichnet, dass** die Erfassung des von den Bereichen (15) der Phosphorschicht (1) ausgesandten Emissionslichts (7) und/oder die Bestrahlung der Phosphorschicht (1) in den Bereichen (15) mit Stimulationslicht (3) durch ein, insbesondere periodisches, Pulssignal (P) gesteuert wird, wobei die Integrationsdauer (T_{I}) bzw. die Stimulationsdauer (T_{S}) durch die Pulsbreite der einzelnen Pulse des Pulssignals (P) gegeben ist.

10. Verfahren nach Anspruch 9, **dadurch gekennzeichnet, dass** die Vorschubdauer (T_{V}) durch die Zeitdauer zwischen gleichen Flanken von zwei aufeinanderfolgenden Pulsen des Pulssignals (P), insbesondere durch die Periodendauer des Pulssignals (P), gegeben ist.

11. Verfahren nach einem der vorangehenden Ansprüche, **dadurch gekennzeichnet, dass** die Bereiche (15) der Phosphorschicht (1) jeweils die Form einer Zeile aufweisen, wobei der Detektor (9) und/oder die Lichtquelle (4) senkrecht zur Längsausdehnung der Zeile relativ zur Phosphorschicht (1) bewegt wird bzw. werden.

## Claims

1. Method for reading out information items stored in a phosphorous layer in which
the phosphorous layer (1) is excited to emit emission light (7), the emission light (7) is sensed by a detector (9), and the detector (9) is moved relative to the phosphorous layer (1) in a forward-travel direction (V) to consecutively sense the emission light (7) emitted from individual regions (15) in the phosphorous layer (1), **characterised in that** the detector (9) senses the emission light (7) emitted from a region (15) during an integration time (T_{I}) that is less than a forward-travel time (T_{V}) required for movement of the detector (9) by the width (B_{V}) of the region (15) in the forward-travel direction (V).

2. Method according to claim 1, **characterised in that** the phosphorous layer (1) is excited to emit emission light (7) in the region (15) during a stimulation time (T_{S}).

3. Method according to claim 2, **characterised in that** the stimulation time (T_{S}) is shorter than the forward-travel time (T_{V}).

4. Method according to claim 3, **characterised in that** the stimulation time (T_{S}) is equal to the integration time (T_{I}).

5. Method according to any one of the preceding claims, **characterised in that** a light source (4) emitting stimulation light (3) is moved relative to the phosphorous layer (1), the individual regions (15) of the phosphorous layer (1) being successively irradiated with stimulation light (3) and excited to emit emission light (7).

6. Method according to claim 5, **characterised in that** a first subregion (16) of the region (15) is irradiated with stimulation light (3) and a second subregion (17) of the region (15) is excited by stimulation light (3) scattered in the phosphorous layer (1) to emit emission light (7).

7. Method according to any one of the preceding claims, **characterised in that** the detector (9) and/or the light source (4) is moved relative to the phosphorous layer (1) at a constant forward-travel speed.

8. Method according to claim 7, **characterised in that** the forward-travel time (T_{V}) is equal to a ratio of the width (B_{V}) of the region (15) and the forward-travel speed.

9. Method according to any one of the preceding claims, **characterised in that** the sensing of the emission light (7) emitted by the regions (15) in the phosphorous layer (1) and/or the irradiation of the phosphorous layer (1) in the regions (15) with stimulation light (3) is controlled by a pulsed signal (P), in particular a cyclic pulsed signal, the integration time (T_{I}) or the stimulation time (T_{S}) being determined by the pulse width of the individual pulses of the pulsed signal (P).

10. Method according to claim 9, **characterised in that** the forward-travel time (T_{V}) is determined by the time duration between identical edges of two consecutive pulses of the pulsed signal (P), in particular by the cycle time of the pulsed signal (P).

11. Method according to any one of the preceding claims, **characterised in that** the regions (15) in the phosphorous layer (1) each have the form of a row, wherein the detector (9) and/or the light source (4) is moved perpendicularly to the longitudinal extension of the row relative to the phosphorous layer (1).

## Revendications

1. Procédé destiné à la lecture d'informations mémorisées dans une couche à base de phosphore, dans lequel
- la couche à base de phosphore (1) est stimulée pour émettre de la lumière d'émission (7),
- la lumière d'émission (7) émise est détectée par un détecteur (9), et
- le détecteur (9) est déplacé par rapport à la couche à base de phosphore (1) dans un sens d'avance (V), et détecte en l'occurrence successivement la lumière d'émission (7) émise par les différentes zones (15) de la couche à base de phosphore (1),
**caractérisé en ce que**
le détecteur (9) détecte la lumière d'émission (7) émise par une zone (15) pendant une durée d'intégration (T_{I}) , qui est inférieure à une durée d'avance (T_{V}) pour le déplacement du détecteur (9) de la largeur (B_{V}) de la zone (15) dans le sens de l'avance (V).

2. Procédé selon la revendication 1, **caractérisé en ce que** la couche à base de phosphore (1) est stimulée pour émettre de la lumière d'émission (7) dans la zone (15) pendant une durée de stimulation (T_{S}).

3. Procédé selon la revendication 2, **caractérisé en ce que** la durée de stimulation (T_{S}) est plus courte que la durée d'avance (T_{V}).

4. Procédé selon la revendication 3, **caractérisé en ce que** la durée de stimulation (T₅) est identique à la durée d'intégration (T_{I}).

5. Procédé selon l'une des revendications précédentes, **caractérisé en ce qu'**une source lumineuse (4) émettant de la lumière de stimulation (3) est déplacée par rapport à la couche à base de phosphore (1), les différentes zones (15) de la couche à base de phosphore (1) étant exposées successivement à de la lumière de stimulation (3), et stimulées pour émettre de la lumière d'émission (7).

6. Procédé selon la revendication 5, **caractérisé en ce qu'**une première zone partielle (16) de la zone (15) est exposée à de la lumière de stimulation (3), et **en ce qu'**une deuxième zone partielle (17) de la zone (15) est stimulée pour émettre de la lumière d'émission (7) par de la lumière de stimulation (3) dispersée dans la couche à base de phosphore (1).

7. Procédé selon l'une des revendications précédentes, **caractérisé en ce que** le détecteur (9) et/ou la source lumineuse (4) est ou sont déplacé(s) à une vitesse d'avance constante par rapport à la couche à base de phosphore (1).

8. Procédé selon la revendication 7, **caractérisé en ce que** la durée d'avance (T_{V}) correspond au quotient résultant de la largeur (B_{V}) de la zone (15) et de la vitesse d'avance.

9. Procédé selon l'une des revendications précédentes, **caractérisé en ce que** la détection de la lumière d'émission (7) émise par les zones (15) de la couche à base de phosphore (1), et/ou l'exposition à de la lumière de stimulation (3) de la couche à base de phosphore (1) dans les zones (15), sont commandées par un signal d'impulsion (P), notamment périodique, la durée d'intégration (T_{I}) ou la durée de stimulation (T_{S}) étant donnée par la durée des différentes impulsions du signal d'impulsion (P).

10. Procédé selon la revendication 9, **caractérisé en ce que** la durée d'avance (T_{V}) est donnée par l'intervalle de temps entre flancs identiques de deux impulsions successives du signal d'impulsion (P), notamment par la durée de période du signal d'impulsion (P).

11. Procédé selon l'une des revendications précédentes, **caractérisé en ce que** les zones (15) de la couche à base de phosphore (1) présentent respectivement la forme d'une ligne, le détecteur (9) et/ou la source lumineuse (4) étant déplacé(s) par rapport à la couche à base de phosphore (1) perpendiculairement à l'extension longitudinale de la ligne.
